# EUROPÄISCHE PATENTANMELDUNG

(11) **EP 1 942 633 A2**
(43) Veröffentlichungstag der Anmeldung: **09.07.2008**
(21) Anmeldenummer: 07021892.0
(22) Anmeldetag: 12.11.2007
(51) Int. Cl.: H04L 29/08

(54) **Verfahren und System für ein Erreichbarkeitsmanagement**

(30) Priorität: 17.11.2006 DE 102006054284
(71) Anmelder: Deutsche Telekom AG, 53113 Bonn (DE)
(72) Erfinder: Lehmann, Bettina, 14612 Falkensee (DE); Burkhardt, Frank, 12159 Berlin (DE); Grothe, Andreas, 10785 Berlin (DE)

(57) **Zusammenfassung**

Erfindungsgemäß ist einem Nutzer eines Managementsystems, mit dessen Hilfe seine Erreichbarkeit gemanagt wird, im System eine Erreichbarkeitsmatrix zugeordnet. In dieser Erreichbarkeitsmatrix ist die jeweilige Erreichbarkeit des Nutzers über die ihm grundsätzlich zur Verfügung stehenden Kommunikationsmedien in Bezug auf eine Mehrzahl möglicher Zustände in Form von Erreichbarkeitssätzen hinterlegt. Beim Eintreten von Ereignissen, welche zu einem Zustandswechsel hinsichtlich der in seiner Erreichbarkeitsmatrix erfassten Zustände führen, wird für den betreffenden Nutzer anhand im System hinterlegter Regeln jeweils ein Erreichbarkeitssatz seiner Erreichbarkeitsmatrix als aktueller Erreichbarkeitsvektor festgelegt, welcher für jedes, dem Nutzer grundsätzlich zur Kommunikation zur Verfügung stehende Medium eine Information darüber enthält, ob der Nutzer über das jeweilige Kommunikationsmedium augenblicklich erreichbar sein soll. Ferner werden für jedes von der Änderung betroffene Kommunikationsmedium, über welches der Nutzer grundsätzlich erreichbar ist, von dem Managementsystem Steuersignale erzeugt, welche entweder an ein Endgerät des Nutzers oder an zum Aufbau eines Kommunikationskanals zu diesem Endgerät dienende Zugangs-/Vermittlungseinrichtungen ausgegeben werden.

## Beschreibung

Die Erfindung betrifft ein Verfahren für das Management der Erreichbarkeit von Personen oder Personengruppen für andere Personen, nämlich zum Management der unter Nutzung kommunikativer Medien gegebenen Erreichbarkeit der betreffenden Personen oder Personengruppen. Sie bezieht sich ferner auf ein zur Durchführung des Verfahrens ausgebildetes Managementsystem. Entsprechend besonders vorteilhafter Weiterbildungen bezieht sich die Erfindung auf ein rollenbasiertes Erreichbarkeitsmanagement.

Im geschäftlichen Alltag kommt dem Terminmanagement, aber auch der Frage eines Managements der Erreichbarkeit von an den geschäftlichen Abläufen beteiligten Personen für andere Personen, eine große Bedeutung zu. Dies gilt umso mehr, als sich in den letzten Jahrzehnten eine Vielzahl neuer, nebeneinander existierender, aber auch miteinander in Verbindung zu bringender Kommunikationswege entwickelt hat. Zu nennen sind hier exemplarisch insbesondere die Möglichkeiten des Mobilfunks, des E-Mailing und der darüber hinaus gehenden Internetnutzung.

Die Erfordernisse und Bedingungen des Terminmanagements und des Erreichbarkeitsmanagements greifen dabei auch häufig ineinander. Während das Management der Erreichbarkeit einer Person früher ausschließlich einer damit beauftragten Person, beispielsweise einer Sekretärin, vorbehalten war, gibt es heute, zumindest im Hinblick auf das Management der Erreichbarkeit von Personen über Kommunikationsmedien, bereits einzelne zumindest teilweise automatisierte beziehungsweise maschinell gesteuerte Abläufe.

Ein sehr einfaches Beispiel hierfür ist der Anrufbeantworter, welcher es einer anrufenden Person zumindest ermöglicht, einer augenblicklich nicht erreichbaren Person eine Nachricht mit der Bitte um Rückruf zu hinterlassen, so dass die betreffende Person gegebenenfalls zu einem späteren Zeitpunkt aufgrund ihres eigenen Rückrufs telefonisch für den Anrufer erreichbar wird. Als ein weiteres Beispiel kann die Anrufweiterleitung genannt werden, welche nach den Vorgaben des Nutzers unter unterschiedlichen Bedingungen erfolgen kann. Auch die Möglichkeit, Klingeltöne für eingehende Anrufe in Abhängigkeit von der Gruppe, welcher ein Anrufer und/oder der Angerufene angehören, unterschiedlich festzulegen, kann als eine einfache Form des Erreichbarkeitsmanagements angesehen werden. Entsprechendes gilt ferner beispielsweise für E-Mail-Filter, welche es ermöglichen, eingehende E-Mails nach bestimmten festzulegenden Regeln automatisch in unterschiedlichen Eingangsordnern abzulegen und dabei gegebenenfalls unerwünschten Spam auszusortieren. Schließlich seien noch so genannte Community-Anwendungen erwähnt, nach welchen es beispielsweise den Angehörigen einer Internet-Community beziehungsweise -Nutzergruppe möglich ist, zu erkennen, welche anderen Mitglieder der Community unter Nutzung der entsprechenden Plattform ebenfalls gerade online sind.

Eine besondere Form der zuvor erwähnten Community-Anwendungen sind so genannte Instant-Messaging-Systeme. Diese ermöglichen den Informationsaustausch in einem virtuellen Raum, dem so genannten Chat-Raum, wobei die Informationen austauschenden Personen jeweils Informationen über die augenblickliche Erreichbarkeit anderer Personen in dem betreffenden Chat-Raum erhalten. Ein solches Instant-Messaging-System, welches den drahtlosen Zugriff auf den virtuellen Chat-Raum mittels mobiler Kommunikationsendgeräte ermöglicht, wird beispielsweise in der DE 602 03 798 T2 beschrieben. Es handelt sich hierbei um ein Nachrichtensystem auf Client-Server-Basis, wobei die Clients in der Lage sind, sowohl Erreichbarkeitsinformationen in Form von Erreichbarkeitsattributen an den Server zu senden, als auch entsprechende Informationen von dem Server zu empfangen. Der Server kann die Erreichbarkeitsinformationen empfangen, speichern, miteinander vergleichen und an die Client-Geräte senden. In den Erreichbarkeitsattributen werden Qualitätsmerkmale verwendet, über die eine Anwendung adressiert werden kann. Gemäß der beschriebenen Lösung gibt es Berechtigungsgruppen von Mitgliedern, denen Rechte zugeordnet werden, welche es ihnen ermöglichen, den gesamten Erreichbarkeitssatz oder nur Teile davon zu abonnieren. In der durch die Druckschrift dargestellten Lösung geht es dabei im Wesentlichen um das Sammeln und an bestimmte Rechte gebundene Weiterverteilen von Erreichbarkeitsinformationen.

Darüber hinaus wird beispielsweise durch die DE 10 2004 038 833 A1 eine Lösung beschrieben, welche das Management der Erreichbarkeit eines Teilnehmers unter zwei verschiedenen, nur einer SIM-Karte zugeordneten Mobilfunknummern betrifft.

Die meisten der vorgenannten Beispiele beziehen sich auf Lösungen zur Erreichbarkeit innerhalb jeweils immer nur eines Kommunikationsmediums. Alle betreffen aber jedenfalls Lösungen, bei denen die zugrunde liegenden Systeme eine gezielte dynamische Beeinflussung der Erreichbarkeit eines Nutzers nicht ermöglichen. Ein wirkliches Erreichbarkeitsmanagement ist jedoch im Grunde nur dann gegeben, wenn ein entsprechendes System nicht nur Informationen zur Erreichbarkeit einer Person sammelt und diese nach wie auch immer gearteten Kriterien anderen Personen zur Verfügung stellt, sondern wenn es darüber hinaus, in Abhängigkeit vorzugebender Randbedingungen, die Erreichbarkeit einer Person gezielt beeinflusst beziehungsweise organisiert, das heißt gegebenenfalls auch die Wege, über welche die betreffende Person erreichbar ist, dynamisch an die jeweiligen Bedingungen anpasst.

Aus dem Stand der Technik sind ferner gruppen- beziehungsweise rollenbasierte Informationssysteme oder den Zugriff auf Informationen rollenbasiert leitende Systeme bekannt. Ein Beispiel hierfür ist die von Computersystemen beziehungsweise Netzwerken her bekannte Rechteverwaltung, in welcher die Rechte der einzelnen, an dem System partizipierenden Nutzer für den Zugriff auf Teile des Systems geregelt und verwaltet werden. Eine entsprechende Lösung wird beispielsweise in der DE 694 273 47 T2 beschrieben.

Aufgabe der Erfindung ist es, eine umfassende, über die bisherigen Ansätze hinausgehende Lösung für das Erreichbarkeitsmanagement anzugeben. Die entsprechende Lösung soll dabei die Möglichkeit einer Beeinflussung der Erreichbarkeit einer Person geben und die Erreichbarkeit unter Nutzung aller zur Verfügung stehender Kommunikationsmedien dynamisch managen. Hierfür sind ein Verfahren und ein zur Durchführung des Verfahrens einsetzbares System zu schaffen.

Die Aufgabe wird durch ein Verfahren mit den Merkmalen des Hauptanspruchs beziehungsweise durch ein Managementsystem gemäß dem ersten Sachanspruch gelöst. Vorteilhafte Aus- beziehungsweise Weiterbildungen der Erfindung sind durch die jeweiligen Unteransprüche gegeben.

Das vorgeschlagene Verfahren zum Erreichbarkeitsmanagement wird unter Nutzung eines entsprechend ausgebildeten, noch zu beschreibenden elektronischen Managementsystems ausgeführt. Dabei soll im Kontext der nachfolgenden Beschreibung eine Person, deren kommunikative Erreichbarkeit mittels des Verfahrens beziehungsweise unter Nutzung des erfindungsgemäßen Managementsystems gemanagt wird, als Nutzer des Managementsystems bezeichnet werden. Für diesen Nutzer wird mittels des erfindungsgemäßen Verfahrens die Erreichbarkeit innerhalb eines vorgegebenen organisatorisch/sozialen Umfelds gemanagt, welches in dem dafür ausgebildeten erfindungsgemäßen Managementsystem abgebildet ist. Bei dem organisatorisch/sozialen Umfeld des Nutzers handelt es sich vorzugsweise um dessen berufliches beziehungsweise Arbeitsplatzumfeld. Selbstverständlich ist aber ein entsprechendes Management auch für ein privates Umfeld einer Person möglich. Gegebenenfalls kann aber auch das Erreichbarkeitsmanagement einer Person innerhalb ein und desselben Managementsystems sowohl für deren berufliches Umfeld als auch für den Privatbereich gemanagt werden.

Nach dem erfindungsgemäßen Verfahren ist einer hinsichtlich ihrer kommunikativen Erreichbarkeit zu managenden Person, also einem Nutzer des Managementsystems, eine in einem Speicher des Managementsystems gehaltene Erreichbarkeitsmatrix zugeordnet. In dieser Erreichbarkeitsmatrix ist die jeweilige Erreichbarkeit des Nutzers über die ihm grundsätzlich zur Verfügung stehenden Kommunikationsmedien in Bezug auf eine Mehrzahl möglicher Zustände hinterlegt, wobei die betreffenden Zustände Eigenschaften der Person des Nutzers oder/und Gegebenheiten seines dem Erreichbarkeitsmanagement zugrunde liegenden organisatorisch/sozialen Umfelds beschreiben. Die miteinander korrespondierenden Zustände und Erreichbarkeiten sind in der Erreichbarkeitsmatrix in Form von Erreichbarkeitssätzen abgelegt. Beim Eintreten dem Managementsystem über an diesem ausgebildete Schnittstellen mitgeteilter Ereignisse, welche zu einem Zustandswechsel hinsichtlich der für einen jeweiligen Nutzer in seiner Erreichbarkeitsmatrix erfassten Zustände führen, wird für den betreffenden Nutzer jeweils ein Erreichbarkeitssatz seiner Erreichbarkeitsmatrix als aktueller Erreichbarkeitsvektor festgelegt, welcher für jedes, dem betreffenden Nutzer grundsätzlich zur Kommunikation zur Verfügung stehende Medium eine Information darüber enthält, ob der betreffende Nutzer über das jeweilige Kommunikationsmedium augenblicklich erreichbar sein soll. Auch die Aufnahme des betreffenden Nutzers in das Managementsystem respektive der Beginn des Managements seiner Erreichbarkeit wird in diesem Kontext als ein solches zustandsänderndes Ereignis behandelt.

Für die Erstellung der Erreichbarkeitsmatrix für einen jeweiligen Nutzer kommen unterschiedliche Möglichkeiten in Betracht. Beispielsweise kann die Erreichbarkeitsmatrix im Zuge der Aufnahme eines Nutzers in das Managementsystem durch manuelle Eingabe als mehrdimensionale Tabelle ausgefüllt werden. Denkbar ist es aber auch, die Matrix durch Berechnung aller für einen Nutzer gegebener Varianten anhand der zu berücksichtigenden Eingangsgrößen/Dimensionen und im System hinterlegter grundsätzlicher Policies zu füllen. In jedem Falle sollte aber das System ausnahmsweise auch eine spätere Änderung der Matrix ermöglichen. Etwa dann, wenn sich grundlegende Policies ändern. Die Unterscheidung der Kommunikationsmedien erfolgt aufgrund unterschiedlicher Ansätze für die Kommunikation, das heißt grundsätzlich unterschiedlicher Technologien und Organisationsprinzipien, aufgrund unterschiedlicher zur Übertragung des jeweiligen Kommunikationsinhalts genutzter Übertragungs- beziehungsweise Vermittlungsnetze und/oder unterschiedlicher bei der Nutzung des jeweiligen Kommunikationsmediums eingesetzter Endgeräte. So wird im Kontext der nachfolgenden Darstellungen zur Erfindung hinsichtlich der Kommunikationsmedien, beispielsweise zwischen der Festnetztelefonie, der Mobilfunktelefonie, der IP-Telefonie, dem SMS- beziehungsweise MMS-Versand, dem E-Mailing und dem so genannten Message to Phone unterschieden, um an dieser Stelle nur einige Kommunikationsmedien zu nennen. Während es sich bei den Telefonievarianten um so genannte synchrone Kommunikationsmedien handelt, spricht man bei den anderen vorstehend unterschiedenen Medien von asynchronen Medien. Darüber hinaus werden aber auch über das Telefonfestnetz oder das Mobilfunknetz anzusprechende Anrufbeantworter beziehungsweise Voiceboxen als eigenständige, ebenfalls asynchrone Kommunikationsmedien angesehen. Den einzelnen Kommunikationsmedien sind dabei jeweils typische Endgeräte zugeordnet, wobei der Begriff Gerät in diesem Zusammenhang in einer erweiterten Bedeutung verwendet werden soll und gegebenenfalls auch ein virtuelles, durch Software visualisiertes Gerät umfassen soll. Nach diesem Verständnis sind beispielsweise ein herkömmliches Telefon ein typisches Endgerät für die Festnetztelefonie, ein Mobiltelefon ein typisches Endgerät der Mobilfunktelefonie sowie für den SMS- beziehungsweise MMS-Empfang und -Versand und für das Abhören einer durch einen entsprechenden Provider zur Verfügung gestellten Voice-Mailbox, ein IP-Telefon ein typisches Endgerät der IP-Telefonie und ein E-Mail-Client ein typisches Endgerät für das E-Mailing.

Der schon angesprochene Erreichbarkeitsvektor wird erfindungsgemäß nach in Regeln gefassten und in einem Regelspeicher des Managementsystems hinterlegten Kriterien festgelegt. Beispiele hierfür sollen später gegeben werden. Zu den Schnittstellen sei an dieser Stelle zunächst nur der Hinweis gegeben, dass über diese Schnittstellen durch manuelle Eingabe oder Signale peripherer elektronischer Komponenten oder Sensoren Daten an das Managementsystem übermittelt werden, welche zum Beispiel Veränderungen hinsichtlich der Anwesenheit oder der Abwesenheit des Nutzers in einem Raum oder einem Gebäude oder Änderungen seines Terminkalenders betreffen. Auch hierzu sollen jedoch an späterer Stelle, unter anderem bei der Erläuterung des Managementsystems, noch nähere Ausführungen gegeben werden.

Das erfindungsgemäße Verfahren ist weiterhin dadurch ausgebildet, dass bei einer Änderung des Erreichbarkeitsvektors für jedes von der jeweiligen Änderung betroffene Kommunikationsmedium, über welches der Nutzer grundsätzlich erreichbar ist, von dem Managementsystem Steuersignale erzeugt werden, welche entweder an ein zur Kommunikation über das betreffende Medium von dem Nutzer des Managementsystems verwendetes Endgerät oder an zum Aufbau eines Kommunikationskanals zu diesem Endgerät dienende Einrichtungen eines Kommunikationsnetzes, nämlich dessen Zugangs-/Vermittlungseinrichtungen ausgegeben werden. Die entsprechenden Steuersignale werden dabei von dem Managementsystem auf der Grundlage von Regeln erzeugt, die in dem bereits genannten oder einem weiteren Regelspeicher des Managementsystems hinterlegt sind. Vorzugsweise erhält das System für eine Erfassung der jeweiligen Ist-Zustände von den entsprechenden Endgeräten beziehungsweise Zugangs-/Vermittlungseinrichtungen die benötigten Informationen hinsichtlich technisch basierter Parameter wie beispielsweise über die Erreichbarkeit über Funk, oder darüber, ob ein Gerät ein oder ausgeschaltet ist, oder aber auch über personenbezogene Parameter, die im Netz oder auf dem Gerät selbst geschaltet werden können, wie z.B. Umleitungen auf ein anderes Medium oder eine andere Nummer. Im Falle dessen, dass eine Person nun versucht, den Nutzer des Managementsystems über eines der ihm grundsätzlich zur Verfügung stehenden Kommunikationsmedien zu kontaktieren, wird dem betreffenden Nutzer des Managementsystems der Kontaktwunsch an einem oder mehreren, durch die Einstellung der Kommunikationsparameter, entsprechend dem aktuellen Erreichbarkeitsvektor, bestimmten Endgerät signalisiert, bei welchem es sich weder zwingend um das von der Kontakt wünschenden Person eigentlich kontaktierte Endgerät des Nutzers, noch um ein Endgerät des von der betreffenden Person zur Kontaktaufnahme verwendeten Kommunikationsmediums handeln muss. Sofern der Nutzer augenblicklich nicht erreichbar ist, erhält die den Kontakt wünschende Person alternativ oder zusätzlich eine entsprechende Information. Die Signalisierung des Kontaktwunsches an einem Endgerät des Nutzers kann dabei gegebenenfalls auch so erfolgen, dass sie für den Nutzer nicht unmittelbar wahrnehmbar ist. Entsprechendes kann zum Beispiel insbesondere bei asynchronen Medien gegeben sein, wie zum Beispiel beim E-Mailing und kann beispielsweise soweit gehen, dass eine E-Mail durch Spam-Filter geblockt wird und der Nutzer hiervon im Sinne einer Signalisierung allenfalls zu einem späteren Zeitpunkt aus entsprechenden Log-Dateien etwas erfährt.

Die konkrete Art und Weise der Steuerung der zuvor angesprochenen Endgeräte oder auch Zugangs-Nermittlungseinrichtungen und auch die entsprechende eine solche Steuerung ermöglichende Ausbildung der Geräte und Einrichtungen ist dabei nicht Gegenstand der Erfindung und soll daher hier nicht näher ausgeführt werden. An dieser Stelle sei dazu nur erwähnt, dass es hierfür bereits verschiedene Möglichkeiten oder Ansätze gibt. Zu denken ist dabei etwa an das

Parlay-System (siehe hierzu zum Beispiel www.parlay.org), javafähige Mobiltelefone oder USIM-Anwendungen. Gegenstand der vorliegenden Erfindung ist jedoch das Management der Erreichbarkeit als solches.

Die Möglichkeit, dass die Signalisierung des Kontaktwunsches bei dem Nutzer des Systems gegebenenfalls an einem Endgerät erfolgt, welches kein typisches Endgerät des von der Kontakt suchenden Person zur Kontaktaufnahme verwendeten Kommunikationsmediums ist, ergibt sich mit Hilfe der zuvor genannten, von dem Managementsystem erzeugten Steuersignale. Beispielsweise kann der Erreichbarkeitsvektor eines Nutzers des Managementsystems aufgrund eines entsprechenden eingetretenen Ereignisses nach der Aktualisierung für das Kommunikationsmedium Festnetz den Nutzer als nicht erreichbar ausweisen. Aufgrund der in dem Regelspeicher hinterlegten Regeln werden dann beispielsweise an das entsprechende Festnetztelefon des Nutzers oder an Vermittlungseinrichtungen des Festnetzbetreibers Steuersignale der Art ausgegeben, dass ein an das Festnetztelefon gerichteter Anruf automatisch auf das Mobiltelefon des Nutzers umgeleitet wird. Demnach ist das Endgerät, an welchem der Kontaktwunsch signalisiert wird (entsprechend dem Beispiel das Mobiltelefon) nicht das Endgerät, welches eigentlich von der Kontakt wünschenden Person kontaktiert wurde. Sofern die Kontakt wünschende Person ihrerseits die Kontaktaufnahme über ein Festnetztelefon versucht hat, handelt es sich zudem bei dem Endgerät, an welchem der Kontaktwunsch signalisiert wird, nicht um ein Endgerät des zur Kontaktaufnahme verwendeten Kommunikationsmediums (hier des Festnetzes), also nicht um ein typisches Endgerät des betreffenden Kommunikationsmediums.

Ein entscheidender Vorteil der Erfindung ist die Tatsache, dass eine Kontakt suchende beziehungsweise wünschende Person nicht lediglich Hinweise über die augenblickliche Erreichbarkeit eines Nutzers des Managementsystems erhält, sondern dass vielmehr die Erreichbarkeit des Nutzers aktiv auf der Grundlage dem System mitgeteilter Ereignisse beeinflusst wird.

Gemäß einer bevorzugten Ausbildungsform der Erfindung erfolgt das Erreichbarkeitsmanagement zudem rollenbasiert. Dabei fließt in die Festlegung des jeweils aktuellen Erreichbarkeitsvektors des Nutzers zumindest eine dem Nutzer in dem organisatorisch/sozialen Umfeld des Managements seiner Erreichbarkeit zugeteilte Rolle ein. Dies geschieht, indem diese Rolle des Nutzers in einem Speicher des Managementsystems in Zuordnung zu seiner Person hinterlegt wird und die entsprechende Rolle mindestens innerhalb einer der in dem Regelspeicher hinterlegten Regeln ein Kriterium zur Festlegung des Erreichbarkeitsvektors bildet. Die Erreichbarkeitsmatrix des betreffenden Nutzers umfasst folglich mindestens einen Erreichbarkeitssatz, dessen ihm zugeordneter Zustand durch beziehungsweise unter anderem durch die entsprechende Rolle beschrieben wird. Als Beispiel für das angesprochene organisatorisch/soziale Umfeld eines Nutzers und eine von ihm darin eingenommene Rolle seien hier das Arbeitsumfeld des Nutzers, also das Management seiner Erreichbarkeit in seinem beruflichen Umfeld, und dessen konkrete Position im Unternehmen, beispielsweise seine Tätigkeit als Mitglied des Support-Teams, genannt. Es ist sicherlich nachvollziehbar, dass für einen Mitarbeiter des Supports möglicherweise ganz andere Anforderungen an seine Erreichbarkeit bestehen, als zum Beispiel für den Mitarbeiter einer Entwicklungsabteilung. Dabei können dem Nutzer des Managementsystems im Hinblick auf möglicherweise mehrere von ihm im Unternehmen verantwortete Positionen auch mehrere Rollen zugewiesen sein. Entsprechend einer vorteilhaften Ausbildung der Erfindung werden zudem mehrere einem Nutzer zugeordnete Rollen, durch das Managementsystem gemäß darin hinterlegten Regeln nach Prioritäten verwaltet. Der jeweils aktuelle Erreichbarkeitsvektor des betreffenden Nutzers wird in diesem Falle unter Berücksichtigung dieser Prioritäten bestimmt. Im Hinblick auf die Nutzer des Managementsystems ist es entsprechend einer Ausgestaltung der Erfindung auch vorgesehen, dass mehrere Nutzer in einem Rollenpool erfasst sind und eine oder mehrere Rollen eines Nutzers beim Eintritt festgelegter Ereignisse auf andere Nutzer des Managementsystems übertragen werden. Entsprechend einer besonders vorteilhaften Weiterbildung des rollenbasierten Erreichbarkeitsmanagements ist beziehungsweise sind zudem die dem Nutzer zugeordnete Rolle oder Rollen vorzugsweise nicht starr, sondern veränderlich angelegt. Dies meint, dass eintretende Ereignisse die momentan von einem Nutzer eingenommene(n) Rolle(n) beeinflussen können. Solche, dem Managementsystem über dessen Schnittstellen mitgeteilte Rollen können, wiederum entsprechend im Regelspeicher des Managementsystems hinterlegter Regeln, zur Veränderung oder zum Fortfall dem Nutzer zugeteilter Rollen oder aber auch zur Zuordnung neuer Rollen für den Nutzer führen. Hierdurch ist es möglich und entsprechend einer Ausbildungsform der Erfindung vorgesehen, den Rollenpool so zu verwalten, dass eine oder mehrere Rollen immer einer festgelegten Mindestzahl von Personen respektive Nutzern des Managementsystems zugeteilt sind. Wie bereits ausgeführt ist die für einen Benutzer im System hinterlegte Erreichbarkeitsmatrix vorzugsweise zumindest im Ausnahmefall auch veränderlich. Ein solcher Ausnahmefall kann unter dem Gesichtspunkt eines rollenbasierten Erreichbarkeitsmanagements zum Beispiel auch dann gegeben sein, wenn grundsätzlich neue Rollen in einem Unternehmen beziehungsweise für dessen Mitarbeiter eingeführt werden, welche folglich auch in dem Managementsystem abzubilden sind.

Weiterhin ist es gemäß einer Ausbildungsform der Erfindung vorgesehen, Personen, welche potentiell für eine Kontaktaufnahme zu dem Nutzer des Managementsystems in Betracht kommen, eine solche Rolle zuzuordnen. So kann es sich bei einer solchen Kontakt suchenden Person beispielsweise um den Vorgesetzten des betreffenden Nutzers oder aber um einen Ansprechpartner der Einkaufsabteilung eines anderen Unternehmens handeln. Auch hier ist es verständlich, dass für diese beiden, möglicherweise Kontakt suchenden Personen unterschiedliche Anforderungen an die Erreichbarkeit des betreffenden Nutzers bestehen können.

Selbstverständlich ist es möglich, das Verfahren rollenbasiert sowohl im Hinblick auf die Rolle des Nutzers des Managementsystems, als auch im Hinblick auf die Rolle potentiell zu ihm Kontakt suchender Personen zu gestalten.

Das erfindungsgemäße Managementsystem besteht aus einer Mehrzahl miteinander interagierender elektronischer, zumindest teilweise sowohl hard-, als auch softwaregestützer Komponenten und umfasst darüber hinaus Speicher und diverse Schnittstellen. Gemäß der Erfindung besteht das Managementsystem konkret zumindest aus einer Managementkomponente mit einem Erreichbarkeitsmanagement-Modul, einem oder mehreren Regelspeichern, einer Kommunikationskomponente, einer oder mehreren Schnittstellen zur Übergabe die Nutzer betreffender Anwesenheits-/Abwesenheits- und/oder Aufenthaltsdaten an das Erreichbarkeitsmanagement-Modul und aus einer Registrierungskomponente zur Registrierung die Nutzer betreffender Ereignisse. In dem Erreichbarkeitsmanagement-Modul der Managementkomponente wird für jeden Nutzer des Managementsystems die bereits zum Verfahren erwähnte Erreichbarkeitsmatrix gehalten und aus dieser der jeweils aktuelle Erreichbarkeitsvektor abgeleitet. Die Aktualisierung des Erreichbarkeitsvektors erfolgt dabei aufgrund manueller Dateneingaben, zum Beispiel eines Nutzers der seine Erreichbarkeit manuell beeinflussen will, und/oder aufgrund von Ausgangssignalen zum Managementsystem gehörender elektronischer Einheiten. Wie bereits zum Verfahren ausgeführt, erfolgt die Aktualisierung des Erreichbarkeitsvektors nach festgelegten Regeln. Dazu interagiert das Erreichbarkeitsmanagement-Modul mit einem oder mehreren, ebenfalls zur Managementkomponente gehörenden Regelspeichern, in welchen die entsprechenden, durch das Erreichbarkeitsmanagement-Modul zu verarbeitenden Regeln gehalten werden. In dem oder den Regelspeichern werden ferner Regeln gehalten, nach welchen im Falle einer Änderung des Erreichbarkeitsvektors eines Nutzers Steuersignale zur Beeinflussung der möglichen Kommunikationskanäle zu dem betreffenden Nutzer erzeugt werden. Diese Steuersignale werden von der dazu mit der Erreichbarkeitskomponente in Verbindung stehenden Kommunikationskomponente generiert und über zu dieser Kommunikationskomponente gehörende Schnittstellen an Endgeräte oder Zugangs-/Vermittlungseinrichtungen eines Kommunikationsnetzes ausgesendet. Die entsprechenden Endgeräte oder Zugangs-Nermittlungseinrichtungen müssen selbstverständlich für den Empfang entsprechender Signale und deren Auswertung beziehungsweise Umsetzung ausgebildet sein. Vorzugsweise bestätigen sie den Empfang und die Umsetzung dieser Signale dem Managementsystem für eine Ist-Zustandserfassung per entsprechender Rückmeldung. Das System verfügt außerdem über Schnittstellen zur Übergabe die Nutzer betreffender Anwesenheits-/Abwesenheits- und/oder Aufenthaltsdaten an das Erreichbarkeitsmanagement-Modul.

Gemäß einer bevorzugten, sich auf ein zum Verfahren bereits erläutertes, rollenbasiertes Erreichbarkeitsmanagement beziehenden Weiterbildung des erfindungsgemäßen Managementsystems verfügt die Managementkomponente neben dem Erreichbarkeitsmanagement-Modul zusätzlich über ein Rollenmanagement-Modul. In diesem werden die Nutzern des Managementsystems und/oder mit den Nutzern kommunizierenden Personen zugeordneten Rollen verwaltet. Vorzugsweise werden dabei in dem Regelspeicher oder den Regelspeichern des Systems auch Regeln gehalten, welche die Grundlage für die Verwaltung der Rollen durch das Rollenmanagement-Modul bilden. Letzteres verfügt dazu selbstverständlich über einen Zugriff auf den oder die entsprechenden Regelspeicher. Hierdurch ist, wie bereits beim Verfahren erläutert, auch die Möglichkeit gegeben, die Rollen dynamisch auszubilden beziehungsweise zuzuordnen, also die einzelnen Personen zugeordneten Rollen aufgrund vom System registrierter Ereignisse zu ändern, zu löschen oder zu ergänzen.

Entsprechend einer praxisgerechten Ausbildungsform verfügt das Management zudem über eine Nutzerverwaltung oder hat Zugriff auf eine solche. In einer solchen Nutzerverwaltung, welche gegebenenfalls auch von anderen Systemen verwendet wird, können bestimmte, die einzelnen Nutzer betreffende Randbedingungen verwaltet werden, welche in diesem Falle also nicht in dem Erreichbarkeitsmanagement-Modul oder dem Rollenmanagement-Modul selbst gehalten werden müssen. Bei diesen Randbedingungen kann es sich beispielsweise um Informationen dazu handeln, über welche Kommunikationsmedien ein Nutzer grundsätzlich erreichbar ist oder auch, welche Rollen er generell überhaupt annehmen kann, wobei sich letzteres durchaus davon unterscheiden kann, welche Rollen ein Nutzer temporär inne haben kann.

Entsprechend einer möglichen Ausbildungsform des Managementsystems verfügt dieses zumindest über eine zur Übergabe von Anwesenheits-/Abwesenheitsdaten vorgesehene Schnittstelle, welche für die Kommunikation mit von Nutzern des Systems mitgeführten RFID-Chips ausgebildet ist.

Aspekte des Systems und des Verfahrens sollen nachfolgend nochmals in einem Ausführungsbeispiel erläutert werden. In den zugehörigen Zeichnungen zeigen:
- Fig.1:: Ein Blockschaltbild für eine prinzipielle Ausbildung des erfindungsgemäßen Managementsystems
- Fig. 2a:: Beispielhaft mehrere für einen Nutzer mögliche Erreichbarkeitsvektoren
- Fig. 2b:: Ein Beispiel für die Veränderung der Erreichbarkeitsvektoren nach Fig. 2a aufgrund eines Ereignisses
- Fig. 2c:: Ein möglicher extrahierter Erreichbarkeitsvektor in Bezug auf die Matrix in Fig. 2b
- Fig. 3:: Die Visualisierung einer beispielhaften dreidimensionalen Erreichbarkeitsmatrix, in der mehrere Erreichbarkeitsvektoren abgebildet sind
- Fig. 4:: Eine symbolische Darstellung möglicher Abhängigkeiten zwischen den die Erreichbarkeit eines Nutzers bestimmenden Größen und Zuständen,

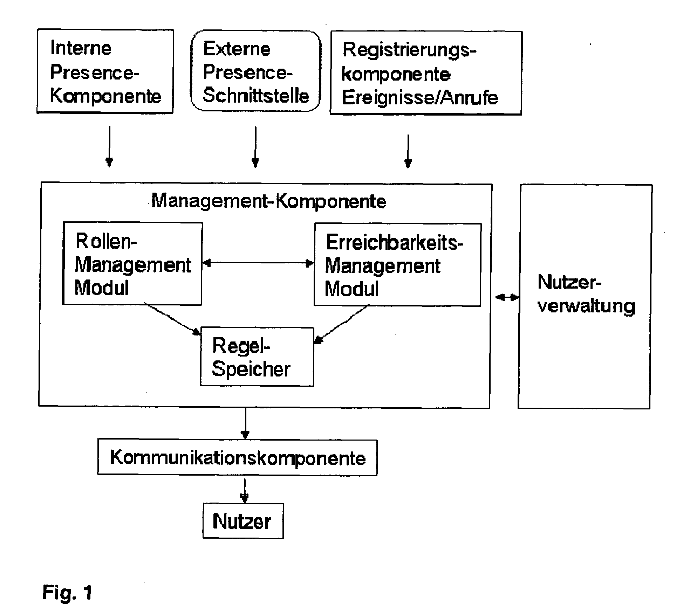

Aus der Fig. 1 sind die Komponenten einer möglichen Ausbildungsform des erfindungsgemäßen Managementsystems und deren Zusammenwirken erkennbar. Die Hauptkomponente des Systems bildet die so genannte Managementkomponente. Gemäß dem dargestellten Beispiel gehören zu dieser Komponente ein Erreichbarkeitsmanagement-Modul, ein Rollenmanagement-Modul und ein Regelspeicher, welche miteinander interagieren. In dem dargestellten Beispiel verfügt die Managementkomponente außerdem über einen Zugriff zu einer generellen Nutzerverwaltung. Ferner gehören zum System mehrere Schnittstellen, eine Registrierungskomponente sowie eine Kommunikationskomponente, auf welche nachfolgend noch näher eingegangen werden soll.

Zunächst sei angenommen, für einen Nutzer des Systems, also eine Person, deren Erreichbarkeit mit Hilfe der Erfindung gemanagt werden soll, erfolgt das Erreichbarkeitsmanagement unabhängig von etwaigen, der betreffenden Person in einem Unternehmen zugeordneten Rollen. Allerdings soll die Erreichbarkeit der betreffenden Person, des Nutzers, für andere, also Dritte, abhängig sein davon, um wen es sich bei den jeweiligen Dritten handelt. Diese Dritten, also potenziell Kontakt zum Nutzer des Managementsystems suchende Personen, sollen in den nachfolgenden Darstellungen vereinfachend als Anrufer bezeichnet werden, unabhängig davon, welches Kommunikationsmedium sie im Einzelfalle für eine Kontaktaufnahme nutzen.

Für den Nutzer, also die hinsichtlich ihrer kommunikativen Erreichbarkeit gemanagte Person, wird bei seiner erstmaligen Einbeziehung in das Managementsystem in dem Erreichbarkeitsmanagement-Modul eine Erreichbarkeitsmatrix angelegt und diese beispielsweise durch manuelle Eingabe als mehrdimensionale Tabelle ausgefüllt. Da die Erreichbarkeit des Nutzers abhängig von der Person eines Kontakt zu ihr wünschenden Anrufers sein soll, wird seine Erreichbarkeit in Form einer zweidimensionalen Matrix im System abgebildet. Den potenziellen Anrufern wird eine Rolle zugeordnet, welche in dem Rollenmanagement-Modul verwaltet wird.

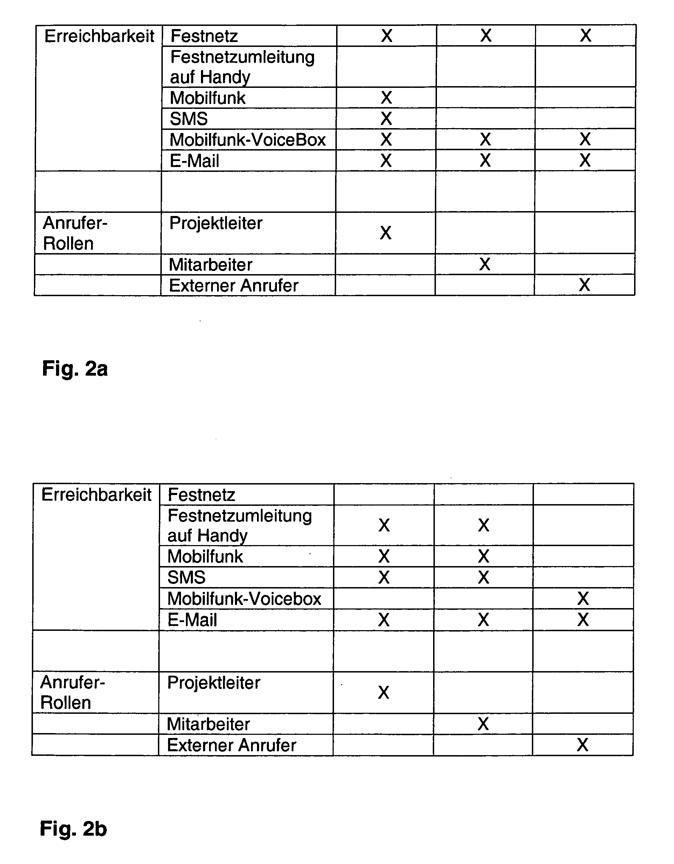

Die Fig. 2a zeigt beispielhaft mehrere für einen Nutzer aus der ihm im Managementsystem zugeordneten Erreichbarkeitsmatrix abgeleitete Erreichbarkeitsvektoren. Wie ersichtlich, werden für den betrachteten Nutzer in Abhängigkeit der jeweils Kontakt zu ihm suchenden Personen (Anrufern) unterschiedliche Erreichbarkeitsvektoren festgelegt. Das heißt den Anrufern werden vom System Rollen zugeteilt und die Erreichbarkeitsvektoren für den betreffenden Nutzer zumindest unter bestimmten Gegebenheiten seines dem Management zugrunde liegenden organisatorisch/sozialen Umfelds im Bezug auf die Anrufer rollenabhängig festgelegt. Gemäß dem in der Fig. 2a gezeigten Beispiel werden die Anrufer nach den Rollen Mitarbeiter (Mitarbeiter der Firma, deren Mitarbeiter auch der Nutzer ist), Projektleiter und externer Anrufer unterschieden. In Abhängigkeit der Rollen potenzieller Anrufer sind in der Erreichbarkeitsmatrix des Nutzers für die einzelnen, ihm zur Verfügung stehenden Kommunikationsmedien unterschiedliche Erreichbarkeiten gegeben und als eine Mehrzahl von Erreichbarkeitssätzen erfasst, welche zustandsabhängig, also abhängig von Eigenschaften der Person des Nutzers oder/und Gegebenheiten seines organisatorisch/sozialen Umfelds gemäß den im Management dazu hinterlegten Regeln als jeweiliger aktueller Erreichbarkeitsvektor festgelegt werden können. Dabei symbolisiert ein Kreuz in dem die betrachteten Kommunikationsmedien betreffenden Teil des jeweiligen Erreichbarkeitsvektors, dass der Nutzer über das jeweilige Kommunikationsmedium erreichbar ist und das die Erreichbarkeit über das jeweilige Kommunikationsmedium und das damit assoziierte Endgerät realisiert wird. In dem dargestellten Beispiel ist der Nutzer für den Projektleiter zum betrachteten Zeitpunkt über alle ihm zur Verfügung stehenden Kommunikationsmedien erreichbar, wobei aufgrund der Erreichbarkeit über das Festnetz keine Umleitung vom Festnetztelefon des Nutzers zu dessen Mobiltelefon aktiviert ist und aufgrund der Erreichbarkeit über das Mobiltelefon keine Anrufe auf der vom entsprechenden Mobilfunkprovider bereitgestellten Voicebox eingehen. Hingegen ist er für andere Mitarbeiter der Firma und für externe Anrufer, wie aus den dargestellten Erreichbarkeitsvektoren ersichtlich, nur über das Festnetz, die Voicebox oder über E-Mail erreichbar. Es sei angenommen, der Nutzer verfüge über einen Betriebsausweis mit einem integrierten RFID-Chip. Mittels dieses Chips ist es möglich, festzustellen, wenn der Nutzer den Raum (seinen üblichen Arbeitsplatz beziehungsweise sein Büro) verlässt. Die entsprechenden Anwesenheits-/Abwesenheitsdaten werden über die eine in diesem Kontext mit "Interne Presence" bezeichnete Schnittstelle unmittelbar dem Erreichbarkeitsmanagementsystem übermittelt.

Aufgrund der im Regelspeicher des Managementsystems hinterlegten Regeln werden in einem solchen Falle die zuvor betrachteten Erreichbarkeitsvektoren des Nutzers entsprechend Fig. 2b dahingehend geändert, dass der Nutzer im Falle eines Anrufs beziehungsweise Kontaktversuchs des Projektleiters zwar nicht unmittelbar über das Festnetz, respektive das Festnetztelefon erreichbar ist, aber in dem Festnetztelefon eine Anrufweiterleitung zum Mobiltelefon des Nutzers aktiviert wird. Entsprechendes geschieht durch von dem Managementsystem, genauer gesagt, seiner Kommunikationskomponente, nach festgelegten Regeln generierten und an das Festnetztelefon des Nutzers gesendeten Steuersignalen. Durch die Steuersignale wird in dem entsprechend ausgebildeten Festnetztelefon die Anrufumleitung zum Mobiltelefon aktiviert, wobei die Teilnehmernummer des Mobiltelefons mit den Steuerdaten übermittelt wird. Die entsprechende Mobiltelefonnummer ist in dem System beispielsweise unter Zuordnung zum Nutzer in der Nutzerverwaltung gespeichert. Im gleichen Falle werden die Erreichbarkeitsvektoren für andere den Nutzer kontaktierende Personen beispielsweise so geändert, dass auch andere Mitarbeiter des Unternehmens den Nutzer über dessen Mobiltelefon erreichen können. Allerdings wird diese Erreichbarkeit über das Mobiltelefon nur dadurch sichergestellt, dass die anderen Mitarbeiter den Nutzer nicht unmittelbar auf dem Mobiltelefon anrufen können, aber ein an das Festnetztelefon des Nutzers gehender Anruf auf das Mobiltelefon umgeleitet wird. In Bezug auf anrufende externe Personen wird für den Nutzer beim Verlassen seines Arbeitsplatzes nach dem dargestellten Beispiel ein Erreichbarkeitsvektor festgelegt, nach welchem der Nutzer nur über E-Mail oder die Voice-Box zu erreichen ist. Die aufgrund der ausgesandten Steuersignale an Endgeräten und/oder Zugangs-/Vermittlungseinrichtungen vorgenommen Änderungen ihrer Kommunikationsparameter werden dem Managementsystem vorzugsweise durch eine entsprechende Rückmeldung bestätigt, damit im System zu jedem Zeitpunkt absolute Transparenz und damit Entscheidungssicherheit hinsichtlich aller Ist-Zustände, also sowohl hinsichtlich der die Person des Nutzers beziehungsweise der sein organisatorisch/soziales Umfeld betreffenden Daten, als auch der Einstellung der Endgeräte beziehungsweise Zugangs-/Vermittlungseinrichtungen, besteht.

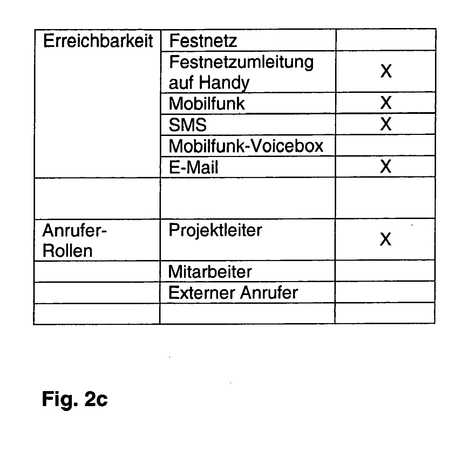

Änderungen des Erreichbarkeitsvektors eines Nutzers können darüber hinaus auch durch andere Ereignisse beziehungsweise Gegebenheiten bedingt werden, welche der Managementkomponente über die hier als "Externe Presence" bezeichnete Schnittstelle oder die Registrierungskomponente bekannt gegeben werden. Beispielsweise können der Managementkomponente über die Schnittstelle "Externe Presence" von Mobilfunkanbietern (mit denen gegebenenfalls ein entsprechender Vertrag besteht, beziehungsweise bei denen ein entsprechender gebührenpflichtiger Service abonniert wurde) Daten über seinen augenblicklichen, außerhalb seines Büros gelegenen Aufenthaltsort zur Verfügung gestellt werden. Über die Registrierungskomponente finden beispielsweise der Terminkalender des Nutzers oder Ereignisse, wie ein momentan bereits stattfindendes Telefonat mit einem Anrufer Eingang in das Management. Die Fig. 2c zeigt einen möglichen aus der Matrix in Fig. 2b extrahierten Erreichbarkeitsvektor. Diese Werte der Erreichbarkeit werden an die Kommunikationskomponente signalisiert und stellen die aktuellen Sollwerte für einen momentanen Erreichbarkeitsstatus dar.

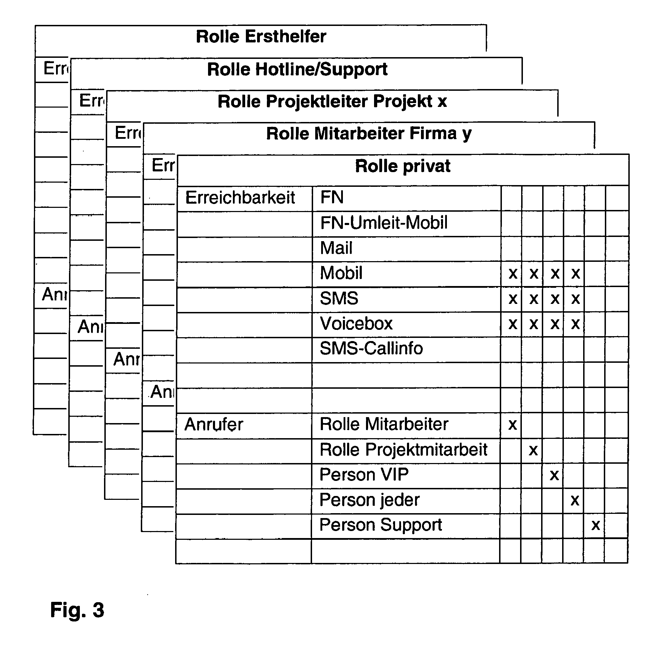

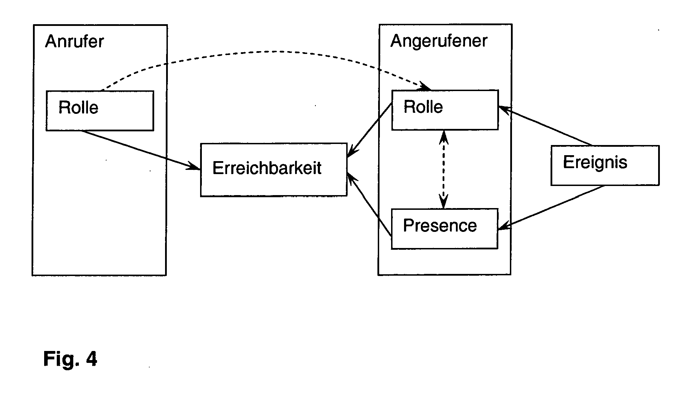

In der Fig. 3 ist beispielhaft eine mehrdimensionale Erreichbarkeitsmatrix für einen Nutzer dargestellt. In dieser werden neben den Rollen möglicher Anrufer auch von dem Nutzer des Managementsystems innerhalb des Unternehmens annehmbare Rollen berücksichtigt, unter denen auch eine als privat bezeichnete Rolle ist, die dem Nutzer zugeteilt wird, wenn er zwar im Unternehmen aber augenblicklich nicht im Dienst, also beispielsweise in der Mittagspause ist. Entsprechend der dargestellten Matrix ändern sich die Erreichbarkeiten des Nutzers beispielsweise in Abhängigkeit davon, ob er gerade zum Dienst im Support eingeteilt ist oder nicht oder in Abhängigkeit davon welche anderen Rollen ihm eventuell neben dem Support zugeordnet sind. Sowohl die Rollen möglicher Anrufer als auch die Rollen des Nutzers werden in dem Rollenmanagement-Modul verwaltet. Die Rollen des Nutzers können sich dabei gegebenenfalls aufgrund eintretender Ereignisse ändern. So ist es denkbar, dass ein zum Support eingeteilter Nutzer diese Rolle vorübergehend verliert, wenn er den Platz an seinem Festnetztelefon verlässt und dass dafür einem anderen Nutzer, dessen Erreichbarkeit ebenfalls über das erfindungsgemäße Managementsystem gemanagt wird und für den in der Nutzerverwaltung vermerkt ist, dass er grundsätzlich die Aufgaben des Supports erfüllen kann, vorübergehend die Rolle Support zugeteilt wird. Die zwischen den Rollen des Nutzers und den Rollen potenzieller Anrufern sowie der Erreichbarkeit beziehungsweise den entsprechenden, dies managenden Komponenten des Systems bestehenden Beziehungen sind in der Fig. 4 unter Einbeziehung des Regelspeichers, in welchem die Regeln für das Management gehalten sind, dargestellt.

Weitere Beispiele seien nachfolgend ohne im Einzelnen angegebenen Bezug auf die Zeichnungen dargestellt.

Der Mitarbeiter xy, ein Nutzer des Managementsystems, hat die Rolle "Hotline" übernommen. Damit ist verbunden, dass alle von außen eingehenden, als Hotline-Anrufe identifizierten Anrufe zu seinem Arbeitsplatztelefon durchgestellt werden.

Das Entfernen des Mitarbeiters xy von seinem Arbeitsplatz wird sensorisch registriert und der Managementkomponente über die Schnittstelle "Interne Presence" signalisiert. Sowohl das Rollenmanagement-Modul als auch das Erreichbarkeits-Management Modul erhalten die Signalisierung. Im Rollenmanagement-Modul bzw. in der Nutzerverwaltung ist registriert, dass xy derzeit in der Rolle "Hotline" aktiv ist. An die Rolle sind aber bestimmte Bedingungen hinsichtlich der Anwesenheit des Rolleninhabers, respektive des Nutzers, geknüpft (hinterlegt im Regelspeicher). Im aktuellen Fall ist die Anwesenheit am Arbeitsplatz als zwingend notwendig zur Ausübung der Rolle "Hotline" definiert. Das Rollenmanagement-Modul ist so implementiert, dass der beschriebene Widerspruch (die Anwesenheit des betreffenden Mitarbeiters ist gemäß der Rolle "Hotline" erforderlich, er hat jedoch seinen Platz verlassen) festgestellt und gelöst werden kann. Die Lösung sieht im Beispiel so aus, dass dem Mitarbeiter xy die Rolle Hotline durch das System entzogen wird. Die Rollenänderung kann wiederum Einfluss auf seine Erreichbarkeit haben, die durch das Erreichbarkeits-Management Modul nun neu gebildet wird. Im aktuellen Fall kann das bedeuten, dass keine Hotline-Anrufe mehr auf das Arbeitsplatztelefon des Nutzers, welcher vorübergehend seinen Platz verlassen hat, vom System durchgestellt werden.

Der Ablauf kann sich aber auch wie folgt gestalten. Über die Schnittstelle "Interne Presence" wird das Entfernen des Mitarbeiters xx von seinem Arbeitsplatz signalisiert. Das Erreichbarkeits-Management Modul holt sich die Regeln vom Regelspeicher und stellt fest, dass eine Änderung der Erreichbarkeit des Mitarbeiters nötig ist. Es wird ein neuer Erreichbarkeitsvektor gebildet, der jetzt das Merkmal "Weiterleitung vom Festnetz auf Mobiltelefon" mit ja besetzt. Die Realisierung der neuen Erreichbarkeit funktioniert wie schon beschrieben durch Aussendung entsprechender Steuersignale über die Kommunikationskomponente an die Netzbetreiber bzw. direkt an die Endgeräte.

Sobald sich der Mitarbeiter in den Meetingroom begibt, was beispielsweise über RFID Technologie sensorisch festgestellt wird, signalisiert die Schnittstelle "Interne Presence" wiederum die Änderung der Anwesenheitsdaten des Mitarbeiters xx. Der Aufenthalt im Meetingroom hat die Anwendung einer anderen Regel zur Folge, gemäß welcher jetzt die Weiterleitung vom Festnetztelefon auf das Mobiltelefon ausgeschaltet wird und stattdessen die Anrufe zum Festnetztelefon auf dem Anrufbeantworter oder/und der Mobilfunk-Voicebox eingehen. Davon abweichend kann bei identifizierten Anrufern die vom System zugehörig zur Gruppe "VIP" eingestuft werden, eine so genannte Callinfo als SMS auf das Mobiltelefon des sich noch im Meetingroom befindenden Mitarbeiters gesendet werden. Die Callinfo beinhaltet beispielsweise den Namen des Anrufers und die Uhrzeit des Anrufversuches.

Wenn ein Nutzer mehrere Rollen gleichzeitig haben kann, bestehen neue Anforderungen, die durch das Rollenmanagement Modul gelöst werden müssen. Der Mitarbeiter "z" einer Firma ist in seiner Rolle als Projektleiter des Projektes x unterwegs. Da er sich nicht am Arbeitsplatz befindet, initiiert das Erreichbarkeitsmanagement-Modul entsprechend der Regel im Regelspeicher eine Weiterleitung aller Anrufer auf das Mobiltelefon von "z". Beispielsweise über eine Applikation auf seinem Mobiltelefon wird Mitarbeiter "z" darüber informiert, dass in einem der Nachbarbüros ein Erste Hilfe Fall eingetreten ist. Das Ereignis wird in diesem Beispiel über die Anwahl der Notrufnummer vom System registriert. Mitarbeiter "z" ist ein ausgebildeter Ersthelfer und im System als geeignet für diese Rolle registriert. Deshalb signalisiert das Rollenmanagement-Modul über die Anwendung den Notfall auf dem Mobiltelefon und fragt Mitarbeiter "z" an, ob er die Ersthelfer-Rolle annehmen kann. Mitarbeiter "z" bestätigt das und geht zu dem betroffenen Kollegen ins Büro um zu helfen bis der Notarzt da ist. Mit der Bestätigung hat Mitarbeiter "z" jetzt parallel zwei Rollen inne, nämlich die des Projektleiters des Projektes x und die des Ersthelfers. Beide Rollen ziehen einen Konflikt bezüglich der hinterlegten Regeln zur Erreichbarkeit nach sich. Die Erreichbarkeit in der Ersthelferrolle lässt in diesem Beispiel keine firmeninternen Anrufweiterleitungen vom Festnetztelefon auf das Mobiltelefon von Mitarbeiter "z" zu. Das Rollen-Management Modul realisiert jetzt eine Priorisierung der Rollen und signalisiert diese an das Erreichbarkeitsmanagement-Modul, welches jetzt einen neuen Erreichbarkeitsvektor generiert und danach die resultierende Erreichbarkeit, wie schon beschrieben realisiert.

Wie bereits dargestellt können Nutzer des erfindungsgemäßen Managementsystems hinsichtlich ihrer Rollen auch in Rollenpools verwaltet werden. Dabei kann eine Anzahl von Inhabern der Rolle z.B. "Hotline" definiert werden, die durch das Managementsystem konstant gehalten werden soll, obwohl sich die Anwesenheitsdaten der Rolleninhaber auch so ändern können, dass ihnen wie schon im obigen Beispiel beschrieben, die Rolle vom System entzogen werden muss. Um diese Aufgabe zu bewältigen, wird das Rollenmanagement-Modul mit zusätzlicher Funktionalität versehen. Das Rollen-Management Modul verwaltet jetzt eine Menge potentieller Rolleninhaber und bildet diese auf die geforderte Zahl der aktiven Rolleninhaber ab. Dabei werden die potentiellen Rolleninhaber mit statischen oder auch dynamischen Prioritäten gekennzeichnet. Als statische Priorität zur Rollenvergabe kann eine einfache Rangfolge dienen, die fest im System konfiguriert wird (Wenn es eine Hotline gibt, dann ist Nutzer xyz immer der Erste und Nutzer xxy der Zweite, der die Rolle bekommt). Als dynamische Priorität können z.B. sich dynamische verändernde Anwesenheitsdaten beziehungsweise -informationen (Lokalität, Laune, im Meeting oder nicht ...) herangezogen werden, das heißt xyz und xxy bekommen die Rolle nur, wenn sie nicht im Meeting sitzen. Zuvor wurde schon beschrieben, dass einem Nutzer die Rolle aufgrund sich ändernder Anwesenheitsdaten entzogen werden kann. Wenn das Rollenmanagement-Modul in diesem Fall die Rolle einem der angenommenen vier Rolleninhaber der Rolle "Hotline" entzieht, dann ist jetzt ein Algorithmus implementiert, nachdem aus der Menge der potentiellen Rolleninhaber entsprechend der Prioritäten der nächste Mitarbeiter ausgesucht wird, der die Rolle "Hotline" zugewiesen bekommt. Mit der Rollenzuweisung ändert sich in der schon beschriebenen Weise unter Umständen auch die Erreichbarkeit dieses Mitarbeiters.

## Patentansprüche

1. Verfahren zum Management der unter Einsatz kommunikativer Medien und zugehöriger Endgeräte gegebenen Erreichbarkeit mindestens einer Person für andere Personen mittels eines dafür ausgebildeten elektronischen Managementsystems, dessen Nutzer die betreffende Person ist, deren Erreichbarkeit innerhalb eines vorgegebenen, in dem Managementsystem abgebildeten organisatorisch/sozialen Umfelds zu managen ist, **dadurch gekennzeichnet, dass**
a.) dem betreffenden Nutzer eine in einem Speicher des Managementsystems gehaltene Erreichbarkeitsmatrix zugeordnet wird, in welcher in Bezug auf eine Mehrzahl möglicher Zustände, welche Eigenschaften der Person des Nutzers oder/und Gegebenheiten seines dem Erreichbarkeitsmanagement zugrunde liegenden organisatorisch/sozialen Umfelds beschreiben, jeweils die Erreichbarkeit des betreffenden Nutzers über die ihm grundsätzlich zur Verfügung stehenden Kommunikationsmedien in Form von Erreichbarkeitssätzen hinterlegt ist,
b.) beim Eintreten von dem Managementsystem über an diesem ausgebildete Schnittstellen mitgeteilten Ereignissen, welche Eigenschaften der Person des Nutzers oder/und Gegebenheiten seines organisatorisch/sozialen Umfelds verändern und damit einen Wechsel von einem zu einem anderen der für den Nutzer in der Erreichbarkeitsmatrix erfassten Zustände bewirken, nach in Regeln gefassten, in einem Regelspeicher des Managementsystems hinterlegten Kriterien ein Erreichbarkeitssatz aus der Erreichbarkeitsmatrix für den betreffenden Nutzer als aktueller Erreichbarkeitsvektor festgelegt wird, wobei auch die Aufnahme des Nutzers in das System zum Management seiner Erreichbarkeit als ein solches zustandsänderndes Ereignis behandelt wird,
c.) bei einer Änderung des Erreichbarkeitsvektors des betreffenden Nutzers für jedes von der jeweiligen Änderung betroffene Kommunikationsmedium von dem Managementsystem, auf der Grundlage ebenfalls im Regelspeicher hinterlegter Regeln gebildete Steuersignale ausgegeben werden, durch welche entweder ein zur Kommunikation über das betreffende Kommunikationsmedium von dem betreffenden Nutzer des Managementsystems verwendetes Endgerät oder zum Aufbau eines Kommunikationskanals zu diesem Endgerät dienende Zugangs-Nermittlungseinrichtungen eines Kommunikationsnetzes durch die Veränderung entsprechender Kommunikationsparameter auf die geänderte Erreichbarkeit eingestellt werden,
d.) dem Nutzer des Managementsystems der Kontaktwunsch einer den Kontakt über eines der dem Nutzer grundsätzlich zur Verfügung stehenden Kommunikationsmedien an einem oder mehreren, durch die Einstellung der Kommunikationsparameter, entsprechend dem aktuellen Erreichbarkeitsvektor, bestimmten Endgerät signalisiert wird, bei welchem es sich weder zwingend um das von der Kontakt wünschenden Person eigentlich kontaktierte Endgerät des Nutzers, noch um ein Endgerät des von der betreffenden Person zur Kontaktaufnahme verwendeten Kommunikationsmediums handelt, oder/und die den Kontakt wünschende Person eine Information darüber erhält, dass der betreffende Nutzer augenblicklich überhaupt nicht erreichbar ist.

2. Verfahren nach Anspruch 1, **dadurch gekennzeichnet, dass** die Erreichbarkeitsmatrix des Nutzers mindestens einen Erreichbarkeitssatz umfasst, dessen ihm zugeordneter Zustand zumindest durch eine dem Nutzer in dem organisatorisch/sozialen Umfeld des Managements seiner Erreichbarkeit zugeteilte Rolle beschrieben wird, wobei diese Rolle des Nutzers in einem Speicher des Managementsystems oder einer mit dem Managementsystem zusammenwirkenden peripheren Einheit in Zuordnung zur Person des Nutzers hinterlegt wird und mindestens innerhalb einer der in dem Regelspeicher hinterlegten Regeln ein Kriterium zur Festlegung des Erreichbarkeitsvektors bildet.

3. Verfahren nach Anspruch 2, **dadurch gekennzeichnet, dass** mehrere einem Nutzer zugeordnete Rollen, durch das Managementsystem gemäß darin hinterlegter Regeln nach Prioritäten verwaltet und der jeweils aktuelle Erreichbarkeitsvektor des betreffenden Nutzers unter Berücksichtigung dieser Prioritäten bestimmt wird.

4. Verfahren nach Anspruch 2 oder 3, **dadurch gekennzeichnet, dass** die Art und die Anzahl der dem Nutzer zugewiesenen Rollen in dem Managementsystem veränderlich ist, wobei mindestens ein Ereignis existiert, dessen dem Managementsystem über die Schnittstellen mitgeteiltes Eintreten, entsprechend im Regelspeicher des Managementsystems festgelegter Regeln, zur Veränderung, zum Fortfall oder zum Hinzufügen einer Rolle für den Nutzer führt.

5. Verfahren nach Anspruch 4, **dadurch gekennzeichnet, dass** mehrere Nutzer des Managementsystems in einem Rollenpool erfasst sind und eine oder mehrere Rollen eines Nutzers beim Eintritt festgelegter Ereignisse auf andere Nutzer des Managementsystems übertragen werden.

6. Verfahren nach Anspruch 5, **dadurch gekennzeichnet, dass** der Rollenpool durch das Managementsystem in der Weise verwaltbar ist, dass eine oder mehrere Rollen des Rollenpools immer einer festgelegten Mindestzahl von Nutzern als aktive Rolle zugeteilt sind.

7. Verfahren nach einem der Ansprüche 1 bis 6, **dadurch gekennzeichnet, dass** in die Festlegung des jeweils aktuellen Erreichbarkeitsvektors des Nutzers eine Rolle einbezogen wird, welche einer Kontakt zu dem Nutzer wünschenden Person in dem organisatorisch/sozialen Umfeld des Managements der Erreichbarkeit des Nutzers zugeteilt ist, sofern die den Kontakt wünschende Person dem Managementsystem bekannt und die betreffende Person von mindestens einer Einheit eines zur Signalisierung des Kontaktwunsches verwendeten Kommunikationskanals identifizierbar ist, indem der bis zum Zeitpunkt der versuchten Kontaktaufnahme für den betreffenden Nutzer des Managementsystems festgelegte Erreichbarkeitsvektor durch Anwendung mindestens einer in dem Regelspeicher hinterlegten Regel, für welche die zu einem früheren Zeitpunkt in einem Speicher des Managementsystems in Zuordnung zu der den Kontakt suchenden Person hinterlegte Rolle ein Kriterium bildet, nochmals aktualisiert wird, wobei eine erneute Einstellung der von der Aktualisierung betroffenen Kommunikationsparameter erfolgt und der Kontaktwunsch erst danach an einem Endgerät des Nutzers signalisiert wird.

8. Managementsystem zum Management der unter Einsatz kommunikativer Medien gegebenen Erreichbarkeit mindestens einer Person für andere Personen, mit einer Mehrzahl miteinander interagierender elektronischer, zumindest teilweise computergestützter Komponenten sowie mit Speichern und Schnittstellen, **dadurch gekennzeichnet, dass** dieses mindestens besteht aus
a.) einer Managementkomponente mit einem Erreichbarkeitsmanagement-Modul, in welchem für jeden Nutzer des Managementsystems eine dessen Erreichbarkeit über verschiedene ihm grundsätzlich zur Verfügung stehende Kommunikationsmedien beschreibende Erreichbarkeitsmatrix gehalten und aus dieser Erreichbarkeitsmatrix beim Eintreten dem Managementsystem mitgeteilter Ereignisse, welche Eigenschaften der Person eines Nutzers oder/und Gegebenheiten seines organisatorisch/sozialen Umfelds verändern, für die betreffende Person entsprechend festgelegter Regeln jeweils ein aktueller Erreichbarkeitsvektor gebildet wird,
b.) einer Kommunikationskomponente zur Generierung auf der Basis von Regeln abgeleiteter Steuersignale und zu deren Aussendung an zu ihrem Empfang sowie zu ihrer Auswertung ausgebildete Endgeräte oder Zugangs-/Vermittlungseinrichtungen eines Kommunikationsnetzes über entsprechende Schnittstellen der Kommunikationskomponente,
c.) einem oder mehreren zur Managementkomponente gehörenden Regelspeichern, in welchem oder welchen die von der Managementkomponente zu verarbeitenden Regeln zur Bildung der Erreichbarkeitsvektoren für die Nutzer sowie zur Ableitung der vorgenannten Steuersignale gehalten werden,
d.) einer oder mehreren Schnittstellen zur Übergabe die Nutzer betreffender Anwesenheits-/Abwesenheits- und/oder Aufenthaltsdaten an das Erreichbarkeitsmanagement-Modul,
e.) einer oder mehreren Schnittstellen zum Aussenden der in der Kommunikationskomponente generierten Steuersignale,
f.) einer Registrierungskomponente zur Registrierung der die Nutzer betreffenden Ereignisse sowie zur Übergabe sich auf diese Ereignisse beziehender Daten an das Erreichbarkeitsmanagement-Modul.

9. Managementsystem nach Anspruch 8, **dadurch gekennzeichnet, dass** die Managementkomponente neben dem Erreichbarkeitsmanagement-Modul ein Rollenmanagement-Modul zur Verwaltung von Rollen aufweist, welche Nutzern des Managementsystems und/oder mit ihnen kommunizierenden Personen zugeordnet sind.

10. Managementsystem nach Anspruch 9, **dadurch gekennzeichnet, dass** in dessen Regelspeicher oder -speichern auch Regeln gehalten werden, welche die Grundlage für die Verwaltung der Rollen in dem über einen Zugriff auf den Regelspeicher verfügenden Rollenmanagement-Modul bilden.

11. Managementsystem nach einem der Ansprüche 8 bis 10, **dadurch gekennzeichnet, dass** dieses über eine Nutzerverwaltung verfügt oder Zugriff auf eine auch von anderen Systemen verwendete Nutzerverwaltung hat.

12. Managementsystem nach einem der Ansprüche 8 bis 11, **dadurch gekennzeichnet, dass** zumindest eine der zur Übergabe von Anwesenheits-/Abwesenheitsdaten vorgesehenen Schnittstellen für die Kommunikation mit von Nutzern des Systems mitgeführten RFID-Chips ausgebildet ist.
